# EUROPEAN PATENT SPECIFICATION

(11) **EP 2 048 199 B1**
(45) Date of publication and mention of the grant of the patent: **21.08.2013**
(21) Application number: 07791263.2
(22) Date of filing: 25.07.2007
(51) Int. Cl.: C08L 67/00, B32B 15/09, C08K 3/00, C08K 5/49, C08L 23/30, C08L 67/02, C08L 91/06

(54) **POLYESTER RESIN COMPOSITION AND LIGHT REFLECTOR**
POLYESTERHARZZUSAMMENSETZUNG UND LICHTREFLEKTOR
COMPOSITION DE RESINE POLYESTER ET REFLECTEUR DE LUMIERE

(30) Priority: 31.07.2006 JP 2006207412; 11.04.2007 JP 2007104333
(43) Date of publication of application: 15.04.2009
(73) Proprietor: MITSUBISHI ENGINEERING-PLASTICS CORPORATION, Tokyo 105-0021 (JP)
(72) Inventor: WATARI, Tatsuya, Hiratsuka-shi Kanagawa 254-0016 (JP); SHOUJI, Hidekazu, Hiratsuka-shi Kanagawa 254-0016 (JP); FURUYA, Toshiyuki, Hiratsuka-shi Kanagawa 254-0016 (JP)
(74) Representative: Müller-Boré & Partner Patentanwälte
(86) International application number: PCT/JP2007/064545
(87) International publication number: WO 2008/015934

(56) References cited:
- EP-A1- 0 044 616
- EP-A2- 0 255 735
- WO-A1-2006/016458
- JP-A- 7 278 418
- JP-A- 06 271 777
- JP-A- 10 138 669
- JP-A- 56 074 168
- JP-A- 60 028 446
- JP-A- 61 021 143
- JP-A- 2001 354 842
- JP-A- 2006 299 047
- JP-A- 2007 161 978
- US-A- 4 554 303

## Description

The present invention relates to the use of a polyester resin composition for light reflector base, on the surface of which a light reflecting layer is provided; a light reflector base obtained by molding the composition; and a light reflector.

Light reflectors such as those used for housing, reflector and bezel of automobile lamps or the like, and for home-use lighting equipment or the like, are desired to have heat resistance enough to endure heating by light sources as well as excellent luminance, smoothness, and uniformity in reflectance, for the purpose of improving directionality of lamp light source and reflectiveness. Accordingly, conventionally used are light reflectors composed of metals (sheet metals), and light reflectors composed of thermosetting resins represented by bulk molding compound (BMC) and sheet molding compound (SMC), and metal films formed on the surfaces of the thermosetting resin by metal plating, vacuum evaporation or the like.

The light reflectors composed of metals are, however, poor in workability, and difficult to handle due to their heaviness. On the other hand, the light reflectors composed of thermosetting resin molds and the metal films formed on the surfaces thereof have excellent characteristics including heat resistance, stiffness, dimensional stability and so forth, but have problems that they need long molding cycles, that they may produce flashes in the process of molding, and that they may degrade working environments due to vaporization of monomers in the process of molding.

For the purpose of solving these problems, there have been proposed light reflector bases using thermoplastic resins, applicable to advanced functions and diversified design of the light reflector, and also excellent in productivity. In recent years, light reflectors having a light reflector base made of thermoplastic resins and having a metal film formed on the surface of the light reflector base, have been coming into the mainstream.

The light reflector bases made of thermoplastic resins are desired to have excellent mechanical characteristics, electrical characteristics, physical/chemical characteristics, and workability. Resin compositions are such as those containing a crystalline thermoplastic polyester resin, in particular a single species of poly(butylene terephthalate) resin, or a mixture of poly(ethylene terephthalate) resin and an other resin, added with various reinforcing materials. A general method of manufacturing the light reflectors has been such as providing pretreatment (under-coating) on the surface of the light reflector bases, and forming a metal film layer as a light reflecting layer typically by vacuum evaporation.

The under-coating may, however, considerably push up the cost, so that there has been another need of obtaining the light reflectors having high luminance without providing the under-coating. For the purpose of ensuring high luminance and uniform reflectance of the reflectors provided with the light reflecting layer on the surface thereof, without under-coating, it may be necessary that the resin mold *per se* has a desirable level of surface smoothness, and excellent glossiness and luminance as well. Taking their applications and specifications into consideration, additional problems such as heat resistance of the resin, and suppression of outgas in the process of molding (low gas emission) occur.

However, the pursuit of higher luminance inevitably needs thorough polishing of the surface of the molding dies, and may degrade mold releasing property of the mold products in the process of molding, may degrade cycle efficiency of molding process, may produce an irregular mold-release pattern, and may consequently lower the reflectance. In view of preventing the formability from degrading, it may therefore be essential to harmonize improvement in the mold-release performance and maintenance of the surface luminance.

By the way, as techniques for obtaining the molds having high luminance and desirable surface profile based on molding-related approach, there have generally been adopted a method of elevating resin temperature so as to improve the fluidity, and a method of improving transfer performance of the dies by raising the mold temperature so as to decelerate the solidification speed.

These techniques might have successfully improved appearance of the molds, but elevation of the resin temperature and the die temperature have caused a problem of outgas (volatiles) in the process of molding. Since the volatiles may be causative of defective appearance of the molds in a form of clouding (haze) on the surface thereof, the techniques are incapable of successively producing acceptable molds, and additional measures such as polishing and wiping of the dies may be necessary. In addition, the reflective metal surface may be corroded when exposed to high temperatures, that is, the reflective metal surface may be clouded.

Based on material-related approach, blending with a mold-releasing agent have been adopted to improve the mold-release performance. For example, a method of using a poly(alkylene terephthalate) resin, added with a modified silicone oil, an organophosphorus compound and a fine filler has been proposed (see Patent Document 1, for example).

Various waxes have been known as general mold-releasing agents (see Patent Documents 2 and 3, for example). Also there has been proposed a method of using aliphatic esters, aliphatic ester-base compounds obtained by partial saponification thereof, and silicone-base compounds used in combination therewith (see Patent Document 4, for example).

[Patent Document 1] Japanese Laid-Open Patent Publication No. H11-241005
[Patent Document 2] Japanese Laid-Open Patent Publication No. 2005-146103
[Patent Document 3] Japanese Laid-Open Patent Publication No. 2002-105295
[Patent Document 4] Japanese Laid-Open Patent Publication No. 2005-41977

US-patent 4,544,303 describes blends of low-melting, slowly crystallizing copolyesters or of substantially amorphous copolyesters having relatively high glass transition temperatures containing very small amounts of low-molecular-weight polyolefins.

However, use of a large amount of aforementioned mold-releasing agents, in particular those of the wax base, have raised problems in that the outgas from the resin molds may be promoted, surface profile and luminance of the light reflector base may be degraded, and adhesiveness of the metal film layer as the light reflecting layer may be degraded. Also after being finished in a form of light reflector, the light reflector exposed to a high-temperature condition may cause vaporization of the mold-releasing agent in the resin composing the light reflector base, and the resultant outgas may corrode the metal film layer to cloud the light reflector base.

Patent Document 3, using a modified polyolefin resin as a lubricant adopted to a polyester resin and polycarbonate resin, is aimed at improving the baking finish performance, has no relation to a technique of forming a metal film onto the surface of resin molds by vacuum evaporation, and is therefore not applicable thereto due to a large difference in the thickness of the film to be formed.

Moreover, the modified polyolefin resin actually used in Patent Document 3 has an acid value of as typically large as 112 mg KOH/g, so that, even if such material was used for the purpose of solving the problem of surface transferability of the die (mold-release performance) in the process of forming a metal film onto the surface of the resin molds, it has been difficult to solve the subjects, while instead causing failure of mold releasing, clouding, and irregular surface.

Accordingly, there have been strong demands on a light reflector base and a resin composition, in particular a polyester resin composition for forming the same, capable of providing a light reflector excellent in the mold-release performance, needs no under-coating or the like, excellent in the adhesiveness even if a light-reflective metal layer is provided directly on the surface of the resin molds, further excellent in the luminance and reflectance, and suppressed in clouding even when used under high temperatures.

The present inventors went through extensive investigations to solve the above-described subjects, and finally found out that a polyester resin containing a specific mold-releasing component, which is more specifically a polyester resin composition containing an oxidation-modified or acid-modified polyolefin resin having a specific small degree of modification, a weight-average molecular weight of 2,000 or larger, and an acid value fallen in a specific low range, is causative of only a small amount of outgas possibly generates in the process of molding the light reflector base or from the finished light reflector, and is excellent in the adhesiveness with the metal film layer provided on the surface of the light reflector base. The present inventors found out also that the light reflector proves its excellence in terms of keeping high luminance even after being exposed to high-temperature atmospheres, and completed the present invention.

According to an essential aspect of the present invention, there are provided a light reflector base, obtained by molding a polyester resin composition comprising, 100 parts by weight of polyester resin, and (B) 0.05 to 2 parts by weight of oxidation-modified or acid-modified polyolefin resin having a weight-average molecular weight of 2,000 or larger, and an acid value of larger than 1 mg KOH/g and smaller than 10 mg KOH/g; and a light reflector.

The light reflector base of the present invention is excellent in the surface appearance expressed by specular sharpness and surface smoothness. Therefore, a light reflector excellent in the metal depositability, surface profile, and light reflectance may be provided, in the process of manufacturing the light reflector having a metal layer formed on the surface of the light reflector base. In addition, thus-obtained light reflector is suppressed in lowering of these characteristics even under high-temperature environments, and may preferably be used in wide range of applications including housing, reflector and bezel of automobile lamps, and home-use lighting equipment and so forth.

Contents of the present invention will be detailed below. It is to be understood that a word "... to ..." in this specification will be used to indicate a range including the lower and upper limits represented by the numerals given therebefore and thereafter, respectively.

### (A) Polyester Resin

(A) The polyester resin adoptable to the present invention may be any arbitrary one of publicly-known polyester resins, wherein aromatic polyester resin is preferable. The aromatic polyester resin herein means a polyester resin having an aromatic ring on a chain unit of the polymer, and typically means a polymer or copolymer mainly composed of an aromatic dicarboxylic acid component and a diol (and/or its ester or halogenated compound) component, obtained by polycondensation of these components.

Examples of the aromatic dicarboxylic acid component include phthalic acid, terephthalic acid, isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, diphenyl ether-4,4'-dicarboxylic acid, diphenylmethane -4,4'-dicarboxylic acid, diphenylsulfone-4,4'-dicarboxylic acid, diphenylisopropylidene-4,4'-dicarboxylic acid, anthracene-2,5-dicarboxylic acid, anthracene-2,6-dicarboxylic acid, *p*-terphenylene-4,4'-dicarboxylic acid, pyridine-2,5-dicarboxylic acid, succinic acid, adipic acid, sebacic acid, suberic acid, azelaic acid, and dimer acid.

Each of these aromatic dicarboxylic acid components may be used independently, or two or more species of which may be combined according to an arbitrary ratio, wherein terephthalic acid is preferable among these aromatic dicarboxylic acids. So far as the effects of the present invention will not be impaired, an alicyclic dicarboxylic acid, such as adipic acid, pimelic acid, suberic acid, azelaic acid, dodecanedioic acid, sebacic acid and dimer acid, may be used together with these aromatic dicarboxylic acids.

Examples of the diol component include aliphatic glycols, poly(oxyalkylene glycol)s, alicyclic diols, and aromatic diols. The aliphatic glycols may be exemplified by those having 2 to 20 carbon atoms, such as ethylene glycol, trimethyleneglycol, propylene glycol, 1,4-butanediol, 1,3-butanediol, neopentyl glycol, hexanediol, octanediol, and decanediol. Among these, aliphatic glycols having 2 to 12 carbon atoms, and more particularly having 2 to 10 carbon atoms are preferable.

Examples of the poly(oxyalkylene glycol)s include glycols having alkylene groups having 2 to 4 carbon atoms, and containing a plurality of oxyalkylene units, and more specifically include diethylene glycol, dipropylene glycol, ditetramethylene glycol, triethylene glycol, tripropylene glycol, and tritetramethylene glycol.

Examples of the alicyclic diols include 1,4-cyclohexane diol, 1,4-cyclohexane dimethylol, and hydrogenated bisphenol-A. The aromatic diols may be exemplified by 2,2-bis[4-(2-hydroxyethoxy)phenyl] propane, and xylylene glycol.

Examples of the other diol components include esters and halogenated products of the above-described diols, and more specifically include halogenated diols such as tetrabromobisphenol-A, and alkylene oxide (ethylene oxide, propylene oxide, etc.) adducts of tetrabromobisphenol-A. These diol components may be used independently, or two or more species of which may be combined according to an arbitrary ratio. Also a long-chain diol having a molecular weight of 400 to 6,000, more specifically poly(ethylene glycol), poly(1,3-propylene glycol), poly(tetramethylene glycol) , may be used only to a small amount.

Examples of the aromatic polyester resin applicable to the present invention include poly(ethylene terephthalate) resin (PET), poly(propylene terephthalate) resin, poly(butylene terephthalate) resin (PBT), poly(ethylene naphthalate) resin (PEN), poly(butylene naphthalate) resin (PBN), poly(cyclohexane -1,4-dimethylene terephthalate) resin, and poly(trimethylene terephthalate) resin, wherein poly(butylene terephthalate) resin is preferable.

Besides these, copolymers and mixtures of these components may be exemplified. For example, alkylene terephthalate copolymers having alkylene terephthalate constitutional unit as a major constitutional unit, and polyalkylene terephthalate mixtures having poly (alkylene terephthalate) as a major component may be exemplified. In addition, those containing, or being copolymerized with, an elastomer component such as poly(oxytetramethylene glycol) (PTMG) may be adoptable.

The alkylene terephthalate copolyester may be exemplified by copolyesters composed of two or more species of diol components and terephthalic acid; and copolyesters composed of a diol component, terephthalic acid and a dicarboxylic acid other than terephthalic acid. The diol components, for the case where two or more species of which are used, may appropriately be selected and determined from the above-described diol components, wherein the content of monomer unit (s) to be copolymerized with alkylene terephthalate as a major constitutive unit may preferably be adjusted to 25 wt% or smaller, in view of improving the heat resistance.

More specifically, not only alkylene terephthalate copolyester having alkylene terephthalate constitutive unit as the major constitutive unit, such as ethylene glycol/isophthalic acid/terephthalic acid copolymers (isophthalic acid-copolymerized poly(ethylene terephthalate)), and 1,4-butanediol/isophthalic acid/terephthalic acid-copolymerized copolymers (isophthalic acid-copolymerized poly(butylene terephthalate)), but also 1,4-butanediol/isophthalic acid/decane dicarboxylic acid copolymers may be exemplified. Among these, alkylene terephthalate copolyester is preferable.

For the case where alkylene terephthalate copolyesters are used as the (A) polyester resin adoptable to the present invention, the above-described isophthalic acid-copolymerized poly(butylene terephthalate), isophthalic acid-copolymerized poly(ethylene terephthalate) may be preferable. Among these, those containing isophthalic acid component to as much as 25 wt% or below may be particularly preferable, from the viewpoint of heat resistance.

The mixtures of poly(alkylene terephthalate) may be exemplified by mixtures of PBT with a poly(alkylene terephthalate) other than PBT, and mixtures of PBT with an alkylene terephthalate copolyester other than PBT. In particular, mixtures of PBT with PET, mixtures of PBT with poly(trimethylene terephthalate), and mixtures of PBT with PBT/poly(alkylene isophthalate) may be exemplified.

As the aromatic polyester resin, which is the (A) polyester resin adoptable to the present invention, so-called poly(alkylene terephthalate)s, using terephthalic acid as the aromatic dicarboxylic acid component, and mixtures thereof are particularly preferable. Preferable examples of the poly(alkylene terephthalate)s include PBT, PBT/PET copolymer, copolymer obtained by copolymerizing PBT with isophthalic acid, PBT/PTMG copolymer elastomer, and PET. Among these, alkylene terephthalates having PBT as a major constituent, and copolyester thereof are preferable, and in particular, PBT, and mixtures of PBT and polyester resin(s) other than PBT are preferable.

In the mixtures of poly(alkylene terephthalate)s, PBT preferably accounts for 40 to 100 wt%, and more preferably 65 to 100 wt%, of the (A) polyester resin.

Since such mixtures may occasionally degrade the heat resistance due to ester exchange in the process of kneading under fusion or in the process of molding, so that it may be good enough to suppress degradation in the heat resistance, by appropriately using a publicly-known arbitrary organophosphate ester compound.

The number-average molecular weight (Mn) of the (A) polyester resin adoptable to the present invention is not specifically limited, and may be determined based on appropriate selection. It generally falls in the range from 1×10⁴ to 100×10⁴, more preferably from 3×10⁴ to 70×10⁴, and particularly preferably from 5×10⁹ to 50×10⁴.

The intrinsic viscosity [η] of the (A) polyester resin adoptable to the present invention generally falls in the range from 0.5 to 2 dl/g, more preferably from 0.6 to 1.5 dl/g, and particularly preferably from 0.6 dl/g to 1.2 dl/g. The intrinsic viscosity herein means a viscosity measured by dissolving a sample into a mixed solvent of phenol and 1,1,2,2-tetrachloroethane having a ratio by weight of 1:1, using an Ubbelohde viscometer at 30°C.

When polyalkylene terephthalate or its copolyester is used as the (A) polyester resin in the present invention, the intrinsic viscosity [η] preferably falls in the range from 0.5 to 1.5 dl/g, and more preferably from 0.6 to 1.3 dl/g.

When PBT is used as the (A) polyester resin, the intrinsic viscosity of PBT preferably falls in the range from 0.6 to 1.4 dl/g. When PET is used, the intrinsic viscosity of PET preferably falls in the range from 0.6 to 1.0 dl/g. The intrinsic viscosity is preferably adjusted to 0.6 dl/g or larger, in view of raising a tendency of improving the mechanical strength, and also adjusted to 1.4 dl/g or smaller, in view of making surface characteristics of the mold products more readily exhibit high luminance as the light reflector, without excessively lowering the fluidity in the process of molding under fusion.

The terminal carboxyl group content of poly(alkylene terephthalate)s adoptable to the present invention may be determined based on appropriate selection, wherein the content in PBT is preferably 60 µeq/g or smaller, and particularly preferably 50 µeq/g or smaller. By adjusting the content to 60 µeq/g or smaller, the outgas is made less likely to produce in the process of molding, under fusion, of the resin composition usable in the present invention. The lower limit of the terminal carboxyl group content is not specifically limited, and is generally adjusted to 10 µeq/g or larger, taking the productivity in manufacturing of the poly(alkylene terephthalate) resin into consideration.

The terminal carboxyl group content of the (A) polyester resin usable in the present invention is a value measured by dissolving 0.5 g of poly(alkylene terephthalate) into 25 ml of benzyl alcohol, and by titrating it using a 0.01 mol/L sodium hydroxide solution in benzyl alcohol. Methods of adjusting the terminal carboxyl group content may arbitrarily be selected from publicly-known methods, including those adjusting polymerization conditions in the process of polymerization, such as ratio of charging of source materials, polymerization temperature and mode of reducing pressure, and those allowing reaction of end-capping agents to proceed.

Methods of manufacturing the (A) polyester resin adoptable to the present invention may be arbitrary, so that any publicly-known methods may arbitrarily be adoptable. Referring now to an exemplary case of poly(butylene terephthalate) composed of a terephthalic acid component and 1,4-butanediol component, the methods are roughly classified into the direct polymerization method allowing terephthalic acid to directly react with 1,4-butanediol, and the ester exchange method using dimethyl terephthalate as a major source material.

The methods differ from each other in that the former produces water during the esterification reaction in the early stage, and the latter produces alcohol during the ester exchange reaction in the early stage. The direct esterification reaction is advantageous from the aspect of costs of source materials. The methods of manufacturing the polyester may roughly be classified also into batch method and continuous based on embodiment for raw material supply and polymer issuance.

In addition, methods allowing the initial esterification (or ester exchange) reaction to proceed based on a continuous operation, and allowing the succeeding polycondensation to proceed based on a batch operation; or methods allowing the initial exterification (or ester exchange) reaction to proceed based on a batch operation, and allowing the succeeding polycondensation to proceed based on a continuous operation, may be exemplified.

### (B) Modified Polyolefin Resin

In the present invention, the (B) modified polyolefin resin, having a weight-average molecular weight of 2,000 or larger, and an acid value of larger than 1 mg KOH/g and smaller than 10 mg KOH/g, is contained to as much as 0.05 to 2 parts by weight per 100 parts by weight of the (A) polyester resin.

The (B) modified polyolefin resin adoptable to the present invention means a modified polyolefin resin originating from a polyolefin resin (occasionally referred to as "unmodified polyolefin resin", hereinafter) added with functional group(s) showing affinity to polyalkylene terephthalate resin, such as carboxyl group (carboxylic acid (anhydride) group, that is, carboxylic acid group and/or carboxylic anhydride group; the same will apply hereinafter), haloformyl group, ester group, metal carboxylate group, hydroxyl group, alkoxyl group, epoxy group, amino group and amido group, and having a weight-average molecular weight of 2,000 or larger.

The unmodified polyolefin resin adoptable herein may be any of publicly-known ones, which may be exemplified by (co)polymers (which means polymers or copolymers; the same will apply hereinafter) containing one species, or two or more species, based on an arbitrary ratio, of olefins, preferably having 2 to 30 carbon atoms, more preferably 2 to 12 carbon atoms, and still more preferably 2 to 10 carbon atoms.

The olefins having 2 to 30 carbon atoms may be exemplified by ethylene, propylene, α-olefins having 4 to 30 (preferably 4 to 12, and more preferably 4 to 10) carbon atoms, and diens having 4 to 30 (preferably 4 to 18, and more preferably 4 to 8) carbon atoms. The α-olefins may be exemplified by 1-butene, 4-methyl-1-pentene, 1-pentene, 1-octene, 1-decene and 1-dodecene. The diens may be exemplified by butadiene, isoprene, cyclopentadiene, and 11-dodecadiene.

The unmodified polyolefin resin may be exemplified by low-density polyethylene, high-density polyethylene, straight-chain, low-density polyethylene, polypropylene, ethylene-propylene block copolymer, ethylene-propylene random copolymer, polybutene, and mixtures of them. Among these, crystalline polypropylene-base resins such as propylene homopolymer, ethylene-propylene block copolymer, ethylene-propylene random copolymer, and mixtures of them may be preferable from the viewpoint of heat resistance.

As the unmodified polyolefin resin, those containing (co)polymerizable monomer such as ethylene, propylene, α-olefin having 4 to 12 carbon atoms, butadiene, isoprene are particularly preferable; in particular, ethylene, propylene, α-olefin having 4 to 8 carbon atoms and butadiene are preferable; and still in particular, ethylene, propylene and butadiene are preferable.

Methods of manufacturing the unmodified polyolefin resin are arbitrary, without special limitation. The resin may readily be obtained by the methods of manufacturing, specifically such as allowing (co)polymerization to proceed under the presence of radical catalyst, metal oxide catalyst, Ziegler catalyst, Ziegler-Natta catalyst, various metallocene catalysts .

The radical catalyst may be exemplified by ditertiarybutyl peroxide, benzoyl peroxide, decanoyl peroxide, dodecanoyl peroxide, hydrogen peroxide-Fe²⁺ salt and azo compounds. The metal oxide catalyst may be exemplified by silica-alumina carrier adhered with chromium oxide or the like. Ziegler catalyst and Ziegler-Natta catalyst may be exemplified by (C₂H₅)₃Al-TiCl₄.

The (B) modified polyolefin resin adoptable to the present invention are those obtained by introducing functional group(s) showing affinity to poly(alkylene terephthalate) resin, into the above-described unmodified polyolefin resin. Methods of introducing these functional groups may be arbitrary, wherein any arbitrary one of publicly-known methods may be adoptable.

The group having affinity to the poly(alkylene terephthalate) resin may specifically be exemplified by carboxyl group [carboxylic acid (anhydride) group, that is, carboxylic acid group and/or carboxylic anhydride group; the same will apply hereinafter], haloformyl group, ester group, metal carboxylate group, hydroxyl group, alkoxyl group, epoxy group, amino group, and amido group.

As the carboxyl group, low-molecular-weight compounds having carboxylic acid group (s), such as maleic acid, maleic anhydride, acrylic acid, and methacrylic acid; low-molecular-weight compounds having sulfo group (s) such as sulfonic acid; and low-molecular-weight compounds having phospho group(s) such as phosphonic acid, may be exemplified. Among these, the low-molecular-weight compounds having carboxylic acid group(s) may be preferable, and in particular, maleic acid, maleic anhydride, acrylic acid and methacrylic acid are preferable.

Carboxylic acid used for modification may be composed of a single species, or two more species combined based on an arbitrary ratio. The amount of addition of the acid in the acid-modified polyolefin resin may generally be 0.01 to 10 wt% of the modified polyolefin resin, and preferably 0.05 to 5 wt%.

The haloformyl group may specifically be exemplified by chloroformyl group and bromoformyl group. Means for adding these functional groups to the unmodified polyolefin resin may rely upon publicly-known arbitrary methods, and more specifically, may be any methods including copolymerization with compounds having the functional groups, and post-treatment such as oxidation.

Considering now types of the functional group, the functional group may preferably be carboxyl group by virtue of its moderate level of affinity with the poly(alkylene terephthalate) resin. The concentration of carboxyl group in the (B) modified polyolefin resin used for the present invention may appropriately be selected and determined, wherein too low concentration may lower the affinity with the (A) polyester resin, may reduce the effect of suppressing the volatiles, and may degrade the effect of mold releasing. On the contrary, too high concentration may, for example, result in excessive cutting of the principal chain of polymer composing the polyolefin resin typically in the process of modification, thereby the amount of production of volatiles may increase due to excessively lowered weight-average molecular weight of the (B) modified polyolefin resin, and mold products of the polyester resin may be clouded on the surface thereof.

Therefore, the concentration, on the basis of acid value of the (B) modified polyolefin resin, may preferably be adjusted larger than 1 mg KOH/g and smaller than 10 mg KOH/g, more preferably 2 to 9 mg KOH/g, still more preferably 2 to 8 mg KOH/g, and particularly preferably 3 to 8 mg KOH/g. As for those intended for use as the light reflector base, the (B) modified polyolefin resin adoptable to the present invention may preferably be an oxidized polyethylene wax, because it produces only a small amount of volatiles, and is excellent in an effect of improving the mold-release performance.

The (B) modified polyolefin resin adoptable to the present invention may be added with those having an acid value of 1 mg KOH/g or smaller (including unmodified polyolefin resin) or having an acid value of 10 mg KOH/g or larger. For the case where a plurality of (B) modified polyolefin resins are used in the present invention, the polyester resin composition will fall within the scope of the present disclosure, if the overall acid value of the (B) modified polyolefin resins is larger than 1 mg KOH/g and smaller than 10 mg KOH/g.

The weight-average molecular weight of the (B) modified polyolefin resin adoptable to the present invention is 2,000 or larger. The value smaller than 2,000 is not desirable, because the volatiles may considerably increase, and may cloud the surface of the mold products. The upper limit thereof is not specifically limited, but may generally be 500,000 or smaller, particularly 300,000 or smaller, more particularly 100,000 or smaller, still more particularly 30,000 or smaller, and particular still more particularly 10, 000, because too large weight-average molecular weight tends to lower the dispersibility, and to degrade the surface profile and mold-release performance of the mold products.
In the (B) modified polyolefin resin adoptable to the present invention, two or more species of modified polyolefins may be combined based on an arbitrary ratio. In this case, any species having a weight-average molecular weight of smaller than 2,000 may be used, provided that the overall weight-average molecular weight is adjustable to 2,000 or larger.

The resins having a weight-average molecular weight of 20,000 or larger, used as the (B) modified polyolefin resin in the present invention, may specifically be exemplified by polyolefin resin modified by grafting maleic anhydride, ethylene-(meth)acrylate copolymer resin, ethylene-methyl acrylate copolymer resin, ethylene-vinyl acetate copolymer resin, ionomer resin, ethylene-vinyl alcohol copolymer resin, and ethylene-glycidyl acrylate copolymer resin.

Those classified into wax type, having weight-average molecular weights of 2,000 or larger and smaller than 20,000, may specifically be exemplified by oxidized polyethylene (for example, Licowax PED Series, Ceridust 3700 Series, etc. from Clariant), polypropylene graft-polymerized with maleic anhydride (for example, Licowax AR Series from Clariant), oxidized vinyl acetate -ethylene copolymer (for example, Licowax 371FP from Clariant), and amido-modified polyethylene wax (Ceridust 9615A from Clariant).

The weight-average molecular weight is measured herein by GPC (gel permeation chromatography), and the acid value is measured by potentiometric titration (ASTM D 1386) using a 0.5 mol KOH solution in ethanol.

The content of the (B) modified polyolefin resin usable in the present invention is 0.05 to 2 parts by weight per 100 parts by weight of the (A) polyester resin component. The content less than 0.05 parts by weight may degrade the surface profile due to degraded mold-release performance in the process of injection-molding, meanwhile the content exceeding 2 parts by weight may result in clouding of the metal surface, when a metal layer, in particular a vacuum-evaporated metal layer, is provided to the surface of the mold products. Therefore, the content of the component (B) is more preferably 0.07 to 1 parts by weight, and particularly preferably 0.1 to 0.8 parts by weight, per 100 parts by weight of the component (A).

The polyester resin composition usable in the present invention may be composed of the (A) polyester resin and the (B) modified polyolefin resin only, or may contain other constituent(s). In this case, the (A) polyester resin and the (B) modified polyolefin resin preferably account for 70 wt% or more of the polyester resin composition of the present invention.
Other constituents possibly be added to the polyester resin composition usable in the present invention will be explained.

### (C) Fine Filler

It may be preferable for the polyester resin composition usable in the present invention to further contain a fine filler, for the purpose of improving heat resistance and molding cycle. The fine filler may specifically be exemplified by silica, kaolin, calcined kaolin, zeolite, quartz, talc, mica, clay, hydrotalcite, mica, graphite, glass bead, calcium carbonate, calcium sulfate, barium carbonate, barium sulfate, magnesium carbonate, magnesium sulfate, calcium silicate, titanium oxide, zinc oxide, magnesium oxide, silicon oxide, calcium titanate, magnesium titanate, and barium titanate. They may be used independently, or two or more species of which may be combined according to an arbitrary ratio. The fine filler may preliminarily be subjected to surface treatment if necessary.

Among these, mineral-base fine fillers such as silica, kaolin, calcined kaolin, zeolite, quartz, talc, mica, clay, hydrotalcite, and mica; and complex-oxide-base fine fillers are preferable, wherein kaolin, calcined kaolin and talc are preferable, and calcined kaolin and talc are particularly preferable. The calcined kaolin and talc are preferably used for suppressing decomposition of the resin components in the process of heating the, because the former has a small particle size and only a small amount of crystal water, and the latter has only a small amount of hydroxyl group on the crystal surface. More specifically, they are preferable because the outgas caused by decomposition of the resin components may be suppressed, thereby the dies and the resin molds for light reflector bases may be prevented from being polluted, and also because the resin molds, after being provided thereon with a reflective layer to make themselves as the light reflector base, can prevent such reflective layer from being clouded.

The mean particle size of the fine filler may appropriately be selected and determined, and may preferably adjusted to 10 µm or smaller, more preferably 5 µm or smaller, and particularly preferably 0.1 to 4 µm. The mean particle size herein means a value obtained by adding an appropriate amount of the fine filler into a 3% aqueous neutral detergent solution, and measuring the resultant dispersion of the fine particles obtained by stirring, using a laser diffraction particle size distribution analyzer LA-700 from Horiba, Ltd.

Oil absorption of the fine filler may appropriately be selected and determined, wherein it is generally 10 ml/100 g or larger, preferably 30 ml/100 g or larger, and particularly preferably 40 to 1000 ml/100 g. The oil absorption herein means a value measured conforming to JIS K-5101-13-2. By adjusting the oil absorption to 10 ml/100 g or larger, the outgas in the process of molding under fusion or in high-temperature environments may more effectively be trapped, thereby the clouding of the light reflector may be more likely to improve. On the other hand, by adjusting the value to 1000 ml/100 g or smaller, the fluidity may preferably be improved in the process of molding under fusion, and also the mechanical strength may be more likely to improve.

The content of the fine filler in the polyester resin composition usable in the present invention may appropriately be selected and determined, wherein it is preferably 0.1 to 50 parts by weight per 100 parts by weight of the (A) polyester resin, more preferably 1 to 45 parts by weight, and still more preferably 0.1 to 30 parts by weight. Adjustment of the content to 0.1 parts by weight or larger may raise a tendency of improving the heat resistance and molding cycle, and adjustment to 50 parts by weight or smaller may raise a tendency of suppressing the filler from floating up to the surface of the mold products to a relatively large degree. As a consequence, the adjustment may be more likely to improve the glossiness of the vacuum-evaporated metal, such as aluminum, deposited on the surface of the mold products.

For a case where the content of the fine filler is elevated for the purpose of adjusting the shrinkage factor, a mixture of two or more species of polyester resin may be used as the (A) polyester resin, so as to avoid lowering in the glossiness of the surface of the light reflector. More specifically, poly(butylene terephthalate) mixed with any of poly(ethylene terephthalate), poly(trimethylene terephthalate), and/or isophthalic acid-copolymerized poly(butylene terephthalate), may be exemplified.

### (D) Organophosphorus Compounds

In the present invention, 0.01 to 1 parts by weight of an (D) organophosphorus compound may preferably be contained per 100 parts by weight of the (A) polyester resin. Inclusion of the organophosphorus compound is preferable, because the ester exchange reaction, possibly occurs when a plurality of species of polyester resin are used, may be suppressed, and the heat resistance may more readily be maintained.

The (D) organophosphorus compound adoptable to the present invention may be any arbitrary publicly-known organophosphorus compounds, such as exemplified by organophosphate compounds, organophosphite compounds and organophosphonite compounds. Among these, the organophosphate compounds may be preferable, in view of suppressing the ester exchange reaction possibly occurs when a plurality of resins are used as the (A) polyester resin.

Among the organophosphate compounds, long-chain dialkyl acid phosphate compounds, represented by the formula (1) below, may be preferable.

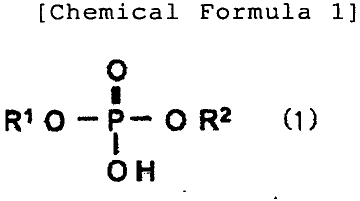

(In the formula, each of R¹ and R² independently represents an alkyl group having 8 to 30 carbon atoms.)

The alkyl group having 8 to 30 carbon atoms is preferably an alkyl group having 10 to 24 carbon atoms, such as exemplified by octyl group, 2-ethylhexyl group, isooctyl group, nonyl group, isononyl group, decyl group, isodecyl group, dodecyl group, tridecyl group, isotridecyl group, tetradecyl group, hexadecyl group, octadecyl group, eicosyl group, and triacontyl group.

The long-chain dialkyl acid phosphate compounds may specifically be exemplified by dioctyl phosphate, di(2-ethylhexyl) phosphate, diisooctyl phosphate, dinonyl phosphate, diisononyl phosphate, didecyl phosphate, diisodecyl phosphate, dilauryl phosphate, ditridecyl phosphate, diisotridecyl phosphate, dimyristyl phosphate, dipalmityl phosphate, distearyl phosphate, dieicosyl phosphate, and ditriacontyl phosphate. Among these, distearyl phosphate, dipalmityl phosphate and dimyristyl phosphate are preferable.

The content of the (D) organophosphorus compound usable in the present invention may appropriately be selected and determined, wherein the content is preferably 0.01 to 1 part(s) by weight per 100 parts by weight of the (A) polyester resin. By adjusting the content within the above-described range, improvement in the heat stability and heat retention stability, which are possible effects of addition of the (D) organophosphorus compound, may be maintained, and furthermore any adverse influences on performances other than the heat stability and heat retention stability may successfully be suppressed. The content of the (D) organophosphorus compound is more preferably 0.05 to 0.5 parts by weight, and particularly preferably 0.07 to 0.4 parts by weight.

In the present invention, an antioxidant and a heat stabilizer may further be added, for the purpose of improving heat stability of the resin composition composing the light reflector base in the process of molding, and particularly for the purpose of suppressing degradation of the appearance and luminance of the mold products due to the outgas, low-molecular-weight components, bleedings and so forth produced from the resultant mold products, even when they are continuously manufactured by injection-molding.

The antioxidant and heat stabilizer adoptable to the present invention may arbitrary be selectable from publicly-known ones including the above-described (D) organophosphorus compound. Specific examples thereof include hindered phenols, thioethers and organophosphorus compounds. They may be used independently, or two or more species of which may be combined according to an arbitrary ratio.

Use of these antioxidant and/or heat stabilizer may effectively improve the heat stability under fusion in the process of extrusion-molding or in a molding machine, may suppress clouding of the surface due to adhesion of the gas, and therefore may be effective in view of continuously manufacturing the resin mold products, which will be given as the light reflector bases having desirable appearance and surface smoothness, over a long duration of time. Still another effect is that generation of the gas from the resin, and generation of the decomposition products may be suppressed even when the mold products are exposed to high-temperature conditions, so that the desirable appearance and surface smoothness may be maintained.

For the purpose of ensuring desirable appearance, mold shrinkage, the polyester resin composition usable in the present invention may contain resins such as polycarbonate resin and acrylonitrile-styrene; general additives such as ultraviolet absorber, fibrous reinforcing material, lubricant, flame retarder, antistatic agent, colorant, pigment, so far as the objects of the present invention will not be impaired.
The contents of these additives is preferably 10 wt% or less of the polyester resin composition usable in the present invention.

Accordingly, the light reflectors manufactured by using the mold products composed of the composition usable in the present invention, and by the direct vacuum evaporation process have desirable appearances, heat resistance and heat stability.

### Preparation of Composition

The polyester resin composition usable in the present invention may be obtained by mixing and kneading the above-described individual components, according to an arbitrary one of publicly-known methods.

The methods of mixing and kneading may be those using, for example, ribbon blender, henschel mixer, banbury mixer, drum tumbler, monoaxial extruder, biaxial extruder, cokneader, multi-axial extruder. The heating temperature during kneading may appropriately be selected and determined, generally in the range from 230 to 300°C.

The light reflector of the present invention is configured by using the polyester resin mold obtained according to the above-described method as the base, and by providing the light reflecting layer on the surface thereof. Methods of molding the resin mold of the present invention are not specifically limited, so that any arbitrary one of publicly-known methods of molding may be adoptable. For example, injection-molding, gas-assisted injection-molding, hollow molding, extrusion-molding, compression molding, calendar molding, rotational molding and may be exemplified. Among these, molding according to the injection-molding method may be preferable, by virtue of desirable productivity, and surface profiles of the obtained resin molds.

The light reflector of the present invention is configured by providing a light reflecting layer on the surface of the above-described light reflector base composed of the polyester resin composition. The light reflecting layer may be obtained by forming a metal layer, typically by vacuum evaporation of metal. Methods of vacuum evaporation of metal are not specifically limited, so that any arbitrary one of publicly-known methods may be adoptable. More specifically, the method described below may be exemplified.

A resin mold is placed still in a vacuum evaporation apparatus kept *in vacuo*, an inert gas such as argon and oxygen are introduced therein, and the surface of the mold is subjected to plasma-assisted activation. Next, in the vacuum evaporation apparatus, electric current is supplied to an electrode having a target held thereon, and particles (aluminum particles, for example) sputtered out by a plasma produced in a chamber by induction discharge are allowed to adhere onto the mold. If necessary, a protective film for the vacuum-evaporated aluminum film may be formed by plasma-assisted polymerization allowed to proceed in a silicon-containing gas, or by depositing silicon oxide typically by ion plating, onto the surface of the vacuum-evaporated aluminum film.

In the present invention, direct provision of the metal layer onto the surface of the resin molds (light reflector bases), without forming an undercoat in between, may be particularly preferable, in view of fully expressing the effects of the present invention. More specifically, the above-described light reflector base is excellent in the surface profile, so that, even if a metal is vacuum-deposited onto the surface thereof without preliminary primer treatment, the surface may express excellent adhesiveness to the metal layer, and thereby desirable glossy surface may be obtained. In addition, the resin molds show good mold-release performances also in the process of injection-molding, so that irregular transfer of the dies may be suppressed.

The metals to be deposited may specifically be exemplified by chromium, nickel and aluminum, wherein aluminum is particularly preferable. For the purpose of enhancing the adhesive force between the surface of the light reflector base and the metal layer, the surface of the resin molds, which serve as the light reflector bases, may be cleaned and degreased before vacuum evaporation.

The light reflector of the present invention may particularly preferably be adoptable to housing, reflector and bezel of lamps used typically for automobiles.

### [Examples]

The present invention will further specifically be explained referring to Examples.

The components below were used in the Examples and Comparative Examples.

### [Polyester Resins] (Poly(Alkylene Terephthalate) Resins)

(1) Poly(butylene terephthalate) (PBT): Novaduran 5008 from Mitsubishi Engineering-Plastics Corporation (MEP), η=0.85, terminal carboxyl group content=20 µeq/g, Mn=20,000

(2) Poly(butylene terephthalate)/isophthalate copolymer (IPA-copolymerized PBT) : Novaduran 5605 from MEP, η=0.85, terminal carboxyl group content=20 µeq/g

(3) Poly(butylene terephthalate)/poly(tetramethylene glycol) copolymer (PTMG-copolymerized PBT): Novaduran 5505 from MEP, η=0.90, terminal carboxyl group content=20 µeq/g

(4) Poly(ethylene terephthalate) (PET): GS385 from Mitsubishi Chemical Corporation, η=0.65

(5) Poly(trimethylene terephthalate) (PTT): Corterra 9200 from Shell Chemicals Ltd., η=0.92

### [Modified Polyolefin Resins]

(6) Oxidized polyethylene wax: Licowax from Clariant, MW=5500, acid value=3 to 5 mg KOH/g [mixture of an oxidized polyethylene wax (Licowax PED522 from Clariant, MW=3100, acid value=22 to 28 mg KOH/g) with a polyethylene wax (Licowax PE520 from Clariant, MW=6000, acid value=0 mg KOH/g)]

(7) Oxidized polyethylene wax: Licowax PED521 from Clariant, MW=4200, acid value=15 to 19 mg KOH/g

(8) Oxidized polyethylene wax: Licowax PED522 from Clariant, MW=3100, acid value=22 to 28 mg KOH/g

(9) Maleic anhydride-grafted polyethylene wax: obtained by the method described below.
Maleic anhydride, a radical generator, and a polyethylene wax (Sanwax 171P from Sanyo Chemical Industries, Ltd.) were thoroughly mixed, and the mixture was kneaded in an extrusion machine set to 150°C, to thereby modify the polyethylene wax by grafting maleic anhydride. The product was cooled, and crushed. Thus-obtained modified polyethylene wax was found to have a molecular weight of 900, and an acid value of 11 mg KOH/g.

(10) Polyethylene wax: Licowax PE130 from Clariant, MW=4800, acid value=0 mg KOH/g

(11) Aliphatic acid ester (glycerin monostearate): Rikemal S100A from Riken Vitamin Co., Ltd.

### [Fine Fillers]

(12) Calcined kaolin: Ultrex 98 from ENGELHARD, mean particle size=0.75 µm, oil absorption=90 ml/100 g (12') Talc: Miceltone from Hayashi-Kasei Co., Ltd., mean particle size=1.4 µm, oil absorption=50 ml/100 g

### [Organophosphate Esters]

(13) Oxyethyl acid phosphate: JP-502 from Johoku Chemical Co., Ltd.
(14) Stearyl phosphate: AX-71 from ADEKA Corporation

### [Testing/Evaluation Methods]

### Irregular Mold-Release Patterns on Resin Molds:

Presence or absence of irregular mold-release patterns on the surfaces of the resin molds manufactured by the methods described later were visually observed, and evaluated according to the judgment criteria below:
○: no irregular mold releasing pattern observed;
Δ: slight irregular mold-release pattern observed, but judged as within the scope of practical use; and
× : considerable degree of irregular mold-release pattern observed.

### Appearances of Light Reflectors:

The light reflectors having aluminum deposited thereon by vacuum evaporation, manufactured by the method described later, were visually observed, and the appearances thereof were evaluated according to criteria A to E. Also the samples of the light reflectors annealed in a hot air drier (forced-convection constant temperature oven DN-43 from Yamato Scientific Co., Ltd.) under two sets of conditions, 160°C for 24 hours, and 180°C for 24 hours, were visually observed and evaluated in a similar manner.

A: High luminance, no clouding, and clear projection of reflected image. No clouding observed even after annealing.
B: High luminance, but slightly dull reflected image. Slight clouding observed after annealing.
C: High luminance, but dull reflected image. Clouding observed after annealing.
D: Reflected image looked distorted due to irregular surface. Clouding observed after annealing.
E: Reflected image not recognizable due to irregular surface. Heavy clouding and whitened surface after annealing.

### Reflectance after Annealing:

The samples having aluminum deposited thereon by vacuum evaporation, manufactured by the method described later, were annealed in the hot air drier at 180°C for 24 hours, and the reflectance was measured using a spectrocolorimeter (CM-3600d from Konica-Minolta Holdings, Inc.).

### Adhesive Tape Peeling Test:

The samples having aluminum deposited thereon by vacuum evaporation, manufactured by the method described later, were annealed in the hot air drier at 180°C for 24 hours, the aluminum-deposited surfaces were wounded with a knife, an adhesive tape was placed thereon, and the adhesiveness against peeling-off of the adhesive tape was evaluated according to the criteria below:

○: Almost no peeling-off of aluminum deposited film observed;
Δ: Slight peeling-off of aluminum deposited film observed; and
×: Considerable peeling-off of aluminum deposited film observed.

### [Examples 1 to 12, Comparative Examples 1 to 9]

Polyester resin(s), modified polyolefin resin(s), a fine filler, and other additive were thoroughly mixed by dry blending according to each of the compositions listed in Table 1, and each mixture was pelletized using a biaxial screw extruder set to 250°C, at an extrusion speed of 15 kg/hour.

Thus-obtained pellets were dried at 120°C for 6 hours before injection-molding, and then molded using an injection-molding machine having a clamping force of 75 ton, at a molding temperature of 265°C, using a mirror-finished die affording a 100 mm × 100 mm × 3 mm mold, at a die temperature of 110°C, to thereby obtain a resin mold. The mold release performance in the process of injection-molding was desirable, wherein the mold product was taken out without resistance.

Thus-obtained resin mold was then deposited on the surface thereof with aluminum by vacuum evaporation to as thick as 140 nm, without preliminary primer treatment, to thereby give an aluminum-deposited light reflector. On the other hand, using the above-described pellets and the injection-molding machine, an ISO test piece was molded at a molding temperature of 265°C, and a die temperature of 80°C.

Results of the test and evaluation are shown in Table 1 to Table 3, with the individual components given in parts by weight.

**[Table 1]**

| Table 1 (in parts by weight) | | | | Examples | | | | | Comparative Examples | | |
|---|---|---|---|---|---|---|---|---|---|---|---|
| | | | | 1 | 2 | 3 | 4 | 5 | 1 | 2 | 3 |
| (A) Poly(alkylene terephthalate)s | | | | | | | | | | | |
| (1) PBT | | | | 100 | 64 | 60 | 80 | 30 | 60 | 60 | 59 |
| (2) IPA-copolymerized PBT | | | | | | | | 30 | | | |
| (3) PTMG-copolymerized PBT | | | | | | | | | | | |
| (4) PET | | | | | 36 | 40 | 20 | 40 | 40 | 40 | 41 |
| (5) PTT | | | | | | | | | | | |
| (A) Subtotal of poly(alkylene terephthalate)s | | | | 100 | 100 | 100 | 100 | 100 | 100 | 100 | 100 |
| Comparison of PBT with other polyester resins | | | | 100/0 | 64/36 | 60/40 | 80/20 | 60/40 | 60/40 | | 59/41 |
| (B) Polyolefin resins | | MW | Acid value (mg KOH/g) | | | | | | | | |
| (6) Oxidized polyethylene wax | | 5500 | 3 to 5 | 0.5 | 0.5 | 0.6 | 0.6 | 0.6 | | | 2.3 |
| (7) Oxidized polyethylene wax | | 4200 | 15 to 19 | | | | | | 0.6 | | |
| (8) Oxidized polyethylene wax | | 3100 | 22 to 28 | | | | | | | 0.6 | |
| (12) Calcined Kaolin | | | | | | 11.2 | 11.2 | 11.2 | 11.2 | 11.2 | 11.4 |
| (13) Organophosphate ester JP-502 | | | | | 0.3 | | | | | | |
| (14) Organophosphate ester AX-71 | | | | | | 0.3 | 0.3 | 0.3 | 0.3 | 0.3 | 0.3 |
| Irregular mold-release pattern on resin molds | | | | ○ | ○ | ○ | ○ | ○ | ○ | ○ | ○ |
| Appearance of light reflector (evaluated based on A to E) | Initial (before annealing) | | | A | A | A | A | A | A | A | A |
| | After annealed at 160°C for 24 hr | | | A | A | A | A | A | A | A | A |
| | After annealed at 180°C for 24 hr | | | A | A | A | B | A | A | B | B |
| Reflectance after annealing | After annealed at 180°C for 24 hr | | | 99% | 98% | 98% | 98% | 98% | 97% | 96% | 95% |
| Anti-Peeling against adhesive tape | After annealed at 180°C for 24 hr | | | ○ | ○ | ○ | ○ | ○ | ○ | ○ | ○ |

**Table 2**

| Table 2 (in parts by weight) | | | | Examples | | | | | | |
|---|---|---|---|---|---|---|---|---|---|---|
| | | | | 6 | 7 | 8 | 9 | 10 | 11 | 12 |
| (A) Poly(alkylene terephthalate)s | | | | | | | | | | |
| (1) PBT | | | | 30 | 100 | 100 | 100 | 60 | 80 | 80 |
| (2) IPA-copolymerized PBT | | | | 30 | | | | | | |
| (3) PTMG-copolymerized PBT | | | | | | | | | | |
| (4) PET | | | | 40 | | | | 40 | 20 | 20 |
| (5) PTT | | | | | | | | | | |
| (A) Subtotal of poly(alkylene terephthalate)s | | | | 100 | | | | | | |
| Comparison of PBT with other polyester resins | | | | 60/40 | 100/0 | | | 60/40 | 80/20 | |
| (B) Polyolefin resins | | MW | Acid value (mg KOH/g) | | | | | | | |
| (6) Oxidized polyethylene wax | | 5500 | 3 to 5 | 0.6 | 0.6 | | | 0.6 | 0.6 | 0.6 |
| (7) Oxidized polyethylene wax | | 4200 | 15 to 19 | | | | | | | |
| (8) Oxidized polyethylene wax | | 3100 | 22 to 28 | | | | | | | |
| (9) Maleic anhydride-grafted polyethylene wax | | 900 | 11 | | | | | | | |
| (10) Polyethylene wax | | 4800 | | | | | | | | |
| (12) Calcined Kaolin | | | | | | | | | | |
| (12') Talc | | | | 11.2 | 5.6 | 0.1 | 3 | 5.6 | 5.6 | 11.2 |
| (14) Organophosphate ester AX-71 | | | | 0.3 | | | | | | |
| Irregular mold-release pattern on resin molds | | | | ○ | ○ | ○ | ○ | ○ | ○ | ○ |
| Appearance of light reflector (evaluated based on A to E) | Initial (before annealing) | | | A | A | A | A | A | A | A |
| | After annealed at 160°C for 24 hr | | | A | A | A | A | A | A | A |
| | After annealed at 180°C for 24 hr | | | A | A | A | A | A | A | A |
| Reflectance after annealing | After annealed at 180°C for 24 hr | | | 98% | 98% | 98% | 98% | 99% | 99% | 98% |
| Anti-peeling against adhesive tape | After annealed at 180°C for 24 hr | | | ○ | ○ | ○ | ○ | ○ | ○ | ○ |

**Table 3**

| Table 3 (in parts by weight) | | | | Comparative Examples | | | | | |
|---|---|---|---|---|---|---|---|---|---|
| | | | | 4 | 5 | 6 | 7 | 8 | 9 |
| (A) Poly(alkylene terephthalate)s | | | | | | | | | |
| (1) PBT | | | | 100 | 100 | 100 | 60 | 60 | 60 |
| (2) IPA-copolymerized PBT | | | | | | | | | |
| (3) PTMG-copolymerized PBT | | | | | | | | | |
| (4) PET | | | | | | | 40 | 90 | 90 |
| (5) PTT | | | | | | | | | |
| (A) Subtotal of poly(alkylene terephthalate)s | | | | 100 | 100 | 100 | 100 | 100 | 100 |
| Comparison of PBT with other polyester resins | | | | 100/0 | | | 60/40 | | |
| (B) Polyolefin resins | | MW | Acid value (mg KOH/g) | | | | | | |
| (6) Oxidized polyethylene wax | | 5500 | 3 to 5 | | | | | | |
| (7) Oxidized polyethylene wax | | 4200 | 15 to 19 | | | | | | |
| (8) Oxidized polyethylene wax | | 3100 | 22 to 28 | | | | | | |
| (9) Maleic anhydride-grafted polyethylene wax | | 900 | 11 | | | 0.5 | | | 0.6 |
| (10) Polyethylene wax | | 4800 | 0 | | 0.5 | | | 0.6 | |
| (11) Aliphatic acid ester S100A | | | | 0.5 | | | 0.6 | | |
| (12) Calcined Kaolin | | | | | | | 11.2 | 11.2 | 11. |
| (13) Organophosphate ester JP-502 | | | | | | | | | |
| (14) Organophosphate ester AX-71 | | | | | | | 0.3 | 0.3 | 0.3 |
| Irregular mold-release pattern on resin molds | | | | × | Δ | Δ | × | Δ | Δ |
| Appearance of light reflector (evaluated based on A to E) | Initial (before annealing) | | | B | B | B | B | B | B |
| | After annealed at 160°C for 24 hr | | | B | C | D | B | C | D |
| | After annealed at 180°C for 24 hr | | | B | D | E | B | D | D |
| Reflectance after annealing | After annealed at 180°C for 24 hr | | | 85% | 80% | 75% | 90% | 82% | 82% |
| Anti-peeling against adhesive tape | After annealed at 180°C for 24 hr | | | ○ | Δ | Δ | ○ | Δ | Δ |

It is known from Table 1 to Table 3 that Examples 1 to 12 using the modified polyolefin resin according to the present disclosure showed better results in all of the mold-release performance, appearance after being exposed to high-temperature environments, light reflectance, and anti-peeling performance against adhesive tape, as compared with Comparative Examples 1 to 9 using several species of component such as mold-releasing agent. Considering now that even several percent of difference in the reflectance has a critical meaning in determining performances of the light reflector, it is understood that the resin composition of the present disclosure, and the light reflector using the same, have desirable characteristics.

According to the present invention, in the process of molding resin-made light reflector bases typically by injection-molding, the resin mold products are now obtainable while having excellent mold-releasing performance, suppression of the outgas, and excellent surface profile. In addition, the light reflector bases may be obtainable, while allowing direct provision of the light reflecting layer such as a vapor-evaporated metal film onto the surface of the resin mold products, without providing, for example, a resin underlying layer; and the light reflectors may be obtainable, while ensuring maintenance of high luminance even after being exposed to high-temperature atmospheres.

## Claims

1. A light reflector base obtained by molding a polyester resin composition comprising (A) 100 parts by weight of polyester resin, and (B) 0.05 to 2 parts by weight of modified polyolefin resin having a weight-average molecular weight of 2,000 or larger, and an acid value of larger than 1 mg KOH/g and smaller than 10 mg KOH/g.

2. The light reflector base of Claim 1, wherein the (B) modified polyolefin resin is an oxidized polyethylene wax.

3. The light reflector base of Claim 1 or 2, the composition further comprising 0.1 to 50 parts by weight of a (C) fine filler having a mean particle size of 10 µm or smaller, per 100 parts by weight of the (A) polyester resin.

4. The light reflector base of Claim 3, wherein the (C) fine filler has an oil absorption of 30 ml/100 g or larger.

5. The light reflector base of any one of Claims 1 to 4, the composition further comprising 0.01 to 1 parts by weight of an (D) organophosphorus compound per 100 parts by weight of the (A) polyester resin.

6. The light reflector base of any one of Claims 1 to 5, wherein at least one species of the (A) polyester resin is an aromatic polyester resin.

7. The light reflector base of any one of Claims 1 to 5, wherein the (A) polyester resin is at least one species selected from the group consisting of poly(ethylene terephthalate) resin, poly(propylene terephthalate) resin, poly(butylene terephthalate) resin, polyethylene naphthalate resin, poly(butylene naphthalate) resin, poly(cyclohexane-1,4-dimethylene terephthalate) resin and poly(trimethylene terephthalate) resin.

8. The light reflector base of any one of Claims 1 to 5, wherein at least one species of the (A) polyester resin is poly(butylene terephthalate) resin.

9. The light reflector base of any one of Claims 1 to 5, wherein 100 to 40 wt% of the (A) polyester resin is poly(butylene terephthalate) resin, and 0 to 60 wt% of the (A) polyester resin is a polyester resin other than poly(butylene terephthalate).

10. The light reflector base of any one of Claims 7 to 9, wherein the terminal carboxy group content of poly(butylene terephthalate) resin is 60 µeq/g or smaller wherein the terminal carboxy group content is a value measured by dissolving 0.5 g of poly(butylene terephthalate) into 25 ml of benzyl alcohol, and by titrating it using a 0.01 mol/L sodium hydroxide solution in benzyl alcohol.

11. The light reflector base of any one of Claims 1 to 10, wherein the intrinsic viscosity of the (A) polyester resin is 0.6 to 1.4 dl/g, wherein the intrinsic viscosity means a viscosity measured by dissolving a sample into a mixed solvent of phenol and 1,1,2,2-tetrachloroethane having a ratio by weight of 1:1, using an Ubbelohde viscometer at 30 °C.

12. The light reflector base of any one of Claims 1 to 11, wherein the acid value of the (B) modified polyolefin resin is 2 to 9 mg KOH/g.

13. The light reflector base of any one of Claims 1 to 11, wherein the acid value of the (B) modified polyolefin resin is larger than 3 mg KOH/g and smaller than 10 mg KOH/g.

14. Use of a polyester resin composition for light reflector base, the composition comprising (A) 100 parts by weight of polyester resin, and (B) 0.05 to 2 parts by weight of modified polyolefin resin having a weight-average molecular weight of 2,000 or larger, and an acid value of larger than 1mg KOH/g and smaller than 10 mg KOH/g.

15. A light reflector comprising a light reflector base according to any one of Claims 1 to 13 and a light reflecting layer provided on the surface of the light reflector base.

16. The light reflector of Claim 15, wherein the light reflecting layer is a vacuum-evaporated metal film, and the vacuum-evaporated metal film is brought into contact with the surface of the light reflector base.

## Patentansprüche

1. Lichtreflektorbasis, gebildet durch Formen einer Polyesterharzzusammensetzung, umfassend (A) 100 Gewichtsteile Polyesterharz und (B) 0,05 bis 2 Gewichtsteile modifiziertes Polyolefinharz, das ein Gewichtsmittel des Molekulargewichts von 2.000 oder größer und eine Säurezahl von größer als 1 mg KOH/g und kleiner als 10 mg KOH/g aufweist.

2. Lichtreflektorbasis nach Anspruch 1, wobei das (B) modifizierte Polyolefinharz ein oxidiertes Polyethylenwachs ist.

3. Lichtreflektorbasis nach Anspruch 1 oder 2, wobei die Zusammensetzung weiter 0,1 bis 50 Gewichtsteile eines (C) Feinfüllmittels, das eine durchschnittliche Teilchengröße von 10 µm oder weniger aufweist, pro 100 Gewichtsteile des (A) Polyesterharzes umfasst.

4. Lichtreflektorbasis nach Anspruch 3, wobei das (C) Feinfüllmittel eine Ölabsorption von 30 ml/100 g oder größer aufweist.

5. Lichtreflektorbasis nach einem der Ansprüche 1 bis 4, wobei die Zusammensetzung weiter 0,01 bis 1 Gewichtsteil einer (D) Organophosphorverbindung pro 100 Gewichtsteile des (A) Polyesterharzes umfasst.

6. Lichtreflektorbasis nach einem der Ansprüche 1 bis 5, wobei mindestens eine Art des (A) Polyesterharzes ein aromatisches Polyesterharz ist.

7. Lichtreflektorbasis nach einem der Ansprüche 1 bis 5, wobei das (A) Polyesterharz mindestens eine Art, ausgewählt aus der Gruppe, bestehend aus Poly(ethylenterephthalat)harz, Poly(propylenterephthalat)harz, Poly(butylenterephthalat)harz, Polyethylennaphthalatharz, Poly(butylennaphthalat)harz, Poly(cyclohexan-1,4-dimethylenterephthalat)harz und Poly(trimethylenterephthalat)harz, ist.

8. Lichtreflektorbasis nach einem der Ansprüche 1 bis 5, wobei mindestens eine Art des (A) Polyesterharzes Poly(butylenterephthalat)harz ist.

9. Lichtreflektorbasis nach einem der Ansprüche 1 bis 5, wobei 100 bis 40 Gew.-% des (A) Polyesterharzes Poly(butylenterephthalat)harz ist und 0 bis 60 Gew.-% des (A) Polyesterharzes ein anderes Polyesterharz als Poly(butylenterephthalat)harz ist.

10. Lichtreflektorbasis nach einem der Ansprüche 7 bis 9, wobei der Gehalt an endständiger Carboxygruppe von Poly(butylenterephthalat)harz 60 µeq/g oder weniger beträgt, wobei der Gehalt an endständiger Carboxygruppe ein Wert ist, gemessen durch Lösen von 0,5 g Poly(butylenterephthalat)harz in 25 ml Benzylalkohol und durch Titrieren davon unter Verwendung einer 0,01 mol/L Natriumhydroxidlösung in Benzylalkohol.

11. Lichtreflektorbasis nach einem der Ansprüche 1 bis 10, wobei die Grenzviskositätszahl des (A) Polyesterharzes von 0,6 bis 1,4 dl/g beträgt, wobei die Grenzviskositätszahl eine Viskosität bedeutet, die durch Lösen einer Probe in einem Lösungsmittelgemisch aus Phenol und 1,1,2,2-Tetrachlorethan, das ein Gewichtsverhältnis von 1:1 aufweist, unter Verwendung eines Ubbelohde-Viskosimeters bei 30 °C gemessen ist.

12. Lichtreflektorbasis nach einem der Ansprüche 1 bis 11, wobei die Säurezahl des (B) modifizierten Polyolefinharzes 2 bis 9 mg KOH/g beträgt.

13. Lichtreflektorbasis nach einem der Ansprüche 1 bis 11, wobei die Säurezahl des (B) modifizierten Polyolefinharzes größer als 3 mg KOH/g und kleiner als 10 mg KOH/g ist.

14. Verwendung einer Polyesterharzzusammensetzung als Lichtreflektorbasis, wobei die Zusammensetzung (A) 100 Gewichtsteile Polyesterharz und (B) 0,05 bis 2 Gewichtsteile modifiziertes Polyolefinharz umfasst, das ein Gewichtsmittel des Molekulargewichts von 2.000 oder größer und eine Säurezahl von größer als 1 mg KOH/g und kleiner als 10 mg KOH/g aufweist.

15. Lichreflektor, umfassend eine Lichtreflektorbasis nach einem der Ansprüche 1 bis 13 und eine lichtreflektierende Schicht, bereitgestellt auf der Oberfläche der Lichtreflektorbasis.

16. Lichtreflektor nach Anspruch 15, wobei die lichtreflektierende Schicht ein vakuumverdampfter Metallfilm ist und der vakuumverdampfte Metallfilm in Kontakt mit der Oberfläche der Lichtreflektorbasis gebracht ist.

## Revendications

1. Base de réflecteur de lumière obtenu par moulage d'une composition de résine de polyester, comprenant (A) 100 parties en poids d'une résine de polyester, (B) 0,05 à 2 parties en poids d'une résine de polyoléfine modifiée ayant un poids moléculaire moyen en poids de 2000 ou plus, et un indice d'acide supérieur à 1 mg KOH/g et inférieur à 10 mg KOH/g.

2. Base de réflecteur de lumière selon la revendication 1, où la résine de polyoléfine modifiée (B) est une cire de polyoxyéthylène oxydé.

3. Base de réflecteur de lumière selon la revendication 1 ou 2, où la composition comprend en outre 0,1 à 50 parties en poids de (C) une charge fine ayant une taille moyenne des particules de 10 µm ou moins, par 100 parties en poids de la résine de polyester (A).

4. Base de réflecteur de lumière selon la revendication 3, où la charge fine (C) présente une absorption d'huile de 30 ml/100 g ou plus.

5. Base de réflecteur de lumière selon l'une quelconque des revendications 1 à 4, où la composition comprend en outre 0,01 à 1 partie en poids de (D) un composé organophosphoré par 100 parties en poids de la résine de polyester (A).

6. Base de réflecteur de lumière selon l'une quelconque des revendications 1 à 5, où au moins une espèce de la résine de polyester (A) est une résine de polyester aromatique.

7. Base de réflecteur de lumière selon l'une quelconque des revendications 1 à 5, où la résine de polyester (A) est au moins une espèce choisie parmi le groupe consistant en la résine poly(téréphtalate d'éthylène), la résine poly(téréphtalate de propylène), la résine poly(téréphtalate de butylène), la résine polynaphtalate d'éthylène, la résine poly(téréphtalate de cyclohexane-1,4-diméthylène) et la résine poly(téréphtalate de triméthylène).

8. Base de réflecteur de lumière selon l'une quelconque des revendications 1 à 5, où au moins une espèce de la résine de polyester (A) est la résine poly(téréphtalate de butylène).

9. Base de réflecteur de lumière selon l'une quelconque des revendications 1 à 5, où 100 à 40% en poids de la résine de polyester (A) est la résine poly(téréphtalate de butylène), et 0 à 60% en poids de la résine de polyester (A) est une résine de polyester autre que la résine poly(téréphtalate de butylène).

10. Base de réflecteur de lumière selon l'une quelconque des revendications 7 à 9, où la teneur en groupe carboxy terminal de la résine poly(téréphtalate de butylène) est de 60 µéq./g ou moins, où la teneur en groupe carboxy terminal est une valeur mesurée par dissolution de 0,5 g de poly(téréphtalate de butylène) dans 25 ml d'alcool benzylique, puis titrage de celle-ci en utilisant une solution d'hydroxyde de sodium à 0,01 mole/litre dans l'alcool benzylique.

11. Base de réflecteur de lumière selon l'une quelconque des revendications 1 à 10, où la viscosité intrinsèque de la résine de polyester (A) se situe dans l'intervalle allant de 0,6 à 1,4 dl/g, où la viscosité intrinsèque signifie la viscosité mesurée en dissolvant un échantillon dans un solvant mixte de phénol et de 1,1,2,2-tétrachloroéthane, ayant un rapport pondéral de 1:1, en utilisant un viscosimètre de Ubbelohde à 30°C.

12. Base de réflecteur de lumière selon l'une quelconque des revendications 1 à 11, où l'indice d'acide de la résine de polyoléfine modifiée (B) se situe dans l'intervalle allant de 2 à 9 mg KOH/g.

13. Base de réflecteur de lumière selon l'une quelconque des revendications 1 à 11, où l'indice d'acide de la résine de polyoléfine modifiée (B) est supérieur à 3 mg KOH/g et inférieure à 10 mg KOH/g.

14. Utilisation d'une composition de résine de polyester pour une base de réflecteur de lumière, la composition comprenant (A) 100 parties en poids d'une résine de polyester, (B) 0,05 à 2 parties en poids d'une résine de polyoléfine modifiée ayant un poids moléculaire moyen en poids de 2000 ou plus, et un indice d'acide supérieur à 1 mg KOH/g et inférieur à 10 mg KOH/g.

15. Réflecteur de lumière comprenant une base de réflecteur de lumière selon l'une quelconque des revendications 1 à 13 et une couche réfléchissant la lumière disposée sur la surface de la base de réflecteur de lumière.

16. Réflecteur de lumière selon la revendication 15, où la couche réfléchissant la lumière est un film métallique évaporé sous vide, et le film métallique évaporé sous vide est mis en contact avec la surface de la base de réflecteur de lumière.
